# EUROPÄISCHE PATENTANMELDUNG

(11) **EP 1 391 677 A2**
(43) Veröffentlichungstag der Anmeldung: **25.02.2004**
(21) Anmeldenummer: 03018012.9
(22) Anmeldetag: 07.08.2003
(51) Int. Cl.: F28F 17/00, F02B 29/04

(54) **Ladeluftkühler**

(30) Priorität: 23.08.2002 DE 10238839
(71) Anmelder: Behr GmbH & Co., 70469 Stuttgart (DE)
(72) Erfinder: Glöckl, Hans, Dr., 70599 Stuttgart (DE)
(74) Vertreter: Reiners, Thomas

(57) **Zusammenfassung**

Ladeluftkühler (70), insbesondere für ein Kraftfahrzeug, mit Rohren, die von Ladeluft durchströmbar und von einem Kühlmedium umströmbar sind, mit zumindest einem mit den Rohren kommunizierenden Sammelkanal und mit einer Kondensat-Ablaßöffnung (80).

## Beschreibung

Die Erfindung betrifft einen Ladeluftkühler, insbesondere für ein Kraftfahrzeug.

Um eine Leistungssteigerung eines Verbrennungsmotors zu erzielen, kann die der Verbrennung zuzuführende Luft beispielsweise mit einem Turbolader verdichtet werden, bevor sie den Brennkammern des Verbrennungsmotors zugeführt wird. Die Verdichtung der Luft bringt jedoch gleichzeitig eine Erwärmung derselben mit sich, die für einen optimalen Ablauf des Verbrennungsprozesses nachteilig ist. Beispielsweise kann dadurch eine verfrühte Zündung oder eine erhöhte Stickoxidemission ausgelöst werden. Um die nachteiligen Folgen von der Verbrennung zugeführter überhitzter Luft zu vermeiden, wird einem Turbolader ein als Ladeluftkühler ausgebildeter Wärmetauscher nachgeschaltet, mit dem die komprimierte Luft vor ihrer Verbrennung auf eine zulässige Temperatur abgekühlt werden kann.

Ein Ladeluftkühler ist beispielsweise in der DE 197 57 034 A1 beschrieben. Bei dem dortigen Wärmetauscher wird die heiße Luft in einen ersten Sammelkanal des Wärmetauschers eingeleitet, wo sie sich verteilt und in Flachrohre einströmt, die in den Sammelkanal einmünden. Die Flachrohre sind nebeneinander, und mit den die langen Seiten ihres Querschnittes enthaltenden Seitenflächen parallel zueinander angeordnet und bilden einen Strömungsweg aus, durch den kühlende Luft durchgeleitet wird. Im Strömungsweg sind zwischen den Flachrohren Kühlrippen angeordnet, die einen effektiven Wärmeaustausch zwischen den Flachrohren und dem kühlenden Luftstrom bewirken. Nach dem Durchqueren des kühlenden Luftstromes münden die Flachrohre in einem zweiten Sammelkanal, der die darin einströmende gekühlte, komprimierte Ladeluft der Verbrennung im Motor zuführt.

Bei derartigen Ladeluftkühlern bildet sich unter Umständen, beispielsweise bei besonders niedrigen Außentemperaturen, Kondenswasser in den Rohren rund/oder den Sammelkanälen, das gegebenenfalls mit aus dem Turbolader stammendem Öl angereichert ist. Das auf diese Weise gebildete Kondensat kann bei extrem niedrigen Temperaturen eine Vereisung des Ladeluftkühlers mit sich bringen, die zu einem untolerierbaren Druckabfall der Ladeluft führt.

Die Aufgabe der Erfindung ist es, einen Ladeluftkühler bereitzustellen, bei dem eine verbesserte Funktion realisierbar ist.

Diese Aufgabe wird durch einen Ladeluftkühler mit den Merkmalen des Anspruchs 1 gelöst.

Gemäß Anspruch 1 weist ein erfindungsgemäßer Ladeluftkühler Rohre und zumindest einen Sammelkanal auf, wobei die Rohre mit dem Sammelkanal kommunizierend verbunden sind. Die Rohre sind von Ladeluft durchströmbar und von einem Kühlmedium umströmbar, so daß die Ladeluft auf einen gewünschten Temperaturbereich abkühlbar ist. Für einen besseren Wärmeübergang können die Rohre mit Kühlrippen verlötet sein, wodurch die effektive Wärmeübertragungsfläche vergrößert wird.

Die Aufgabe der Erfindung wird vorteilhaft dadurch gelöst, daß der Ladeluftkühler eine Kondensat-Ablaßöffnung aufweist. Durch diese Öffnung sind die Ladeluftströmungswege innerhalb des Ladeluftkühlers grundsätzlich mit einem Punkt niedrigeren Druckes verbindbar, so daß ein Kondensat, wie beispielsweise Kondenswasser, nicht innerhalb des Ladeluftkühlers abgeschieden wird, sondern den Ladeluftkühler durch die Kondensat-Ablaßöffnung verläßt.

Bevorzugte Ausführungsformen des erfindungsgemäßen Ladeluftkühlers sind Gegenstand der Unteransprüche.

Gemäß einer bevorzugten Ausgestaltung ist die Kondensat-Ablaßöffnung in einem Bereich des zumindest einen Sammelkanals angeordnet. Besonders bevorzugt ist die Kondensat-Ablaßöffnung in einem untersten Bereich der Ladeluft-Strömungswege innerhalb des Ladeluftkühlers angeordnet. Damit wird gewährleistet, daß sich bildendes Kondensat an einer Stelle, an der es sich ohne eine Ablaßöffnung gegebenenfalls sammeln würde, den Ladeluftkühler verläßt.

Um ein Austreten von gegebenenfalls umweltschädlichem Kondensat in die Umgebung zu vermeiden, ist gemäß einer bevorzugten Ausführungsform die Kondensat-Ablaßöffnung saugseitig an eine Luftfördereinrichtung anschließbar. Die Luftfördereinrichtung kann dabei insbesondere der Turbolader sein, an dessen Ausblasseite der Ladeluftkühler angeschlossen ist, so daß es gewissermaßen zu einem Kreisschluß kommt.

Gemäß einer weiteren vorteilhaften Ausführungsform ist die Kondensat-Ablaßöffnung an einen Abgaskanal anschließbar, wobei sichergestellt sein muß, daß dort ein niedrigerer Druck herrscht als in dem Ladeluftkühler, was allerdings bei üblichen Betriebsbedingungen der Fall ist. Der Abgaskanal kann sich dabei insbesondere in einem Abgaswärmetauscher befinden.

Gemäß einer bevorzugten Ausgestaltung ist die Kondensat-Ablaßöffnung an eine Entspannungsvorrichtung, wie ein Drosselventil, anschließbar, so daß der Druckabfall innerhalb des Ladeluftkühlers auf ein tolerierbares Maß beschränkt bleibt. Besonders bevorzugt ist die Entspannungsvorrichtung mit dem Ladeluftkühler verbunden oder in den Ladeluftkühler integriert, wodurch eine einfache Bauweise realisierbar ist.

Die Erfindung wird nachfolgend anhand eines Ausführungsbeispiels unter Bezugnahme auf die Zeichnung näher erläutert Es zeigt:

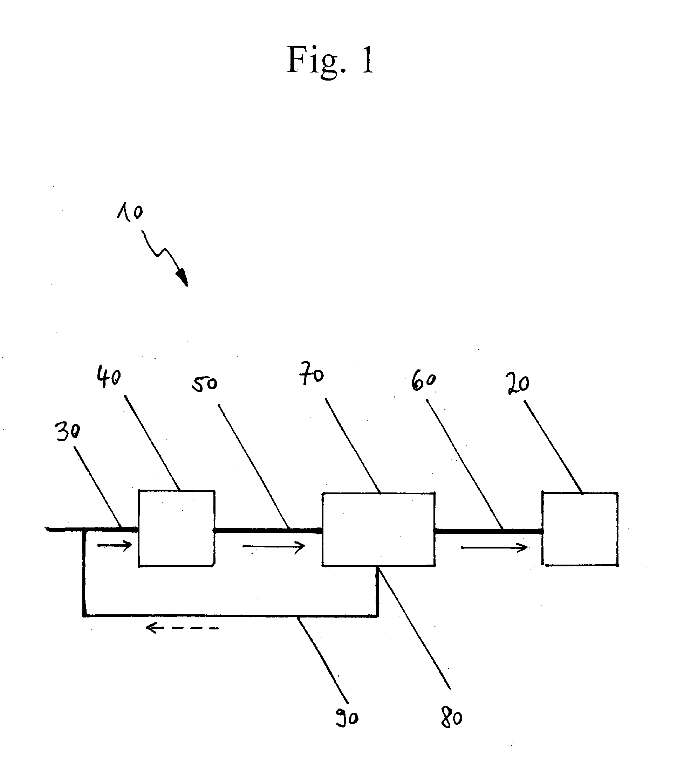

Fig. 1: Einen Schaltplan einer Luftzuführung zu einem Verbrennungsmotor.

In Fig. 1 ist eine Luftzuführung 10 zu einem Verbrennungsmotor 20 schematisch dargestellt, wobei die Strömungsrichtung der Luft durch Pfeile unter den jeweiligen Luftleitungen gekennzeichnet ist. Die Verbrennungsluft wird durch eine Leitung 30 von einem Turbolader 40 angesaugt, verdichtet und über Leitungen 50, 60 den nicht näher gezeigten Verbrennungskammern des Motors 20 zugeführt. Für eine Abkühlung der durch die Verdichtung erhitzten Ladeluft in einen gewünschten Temperaturbereich ist zwischen den Turbolader 40 und den Motor 20 ein Ladeluftkühler 70 geschaltet.

Der Ladeluftkühler 70 weist an seinem untersten Punkt eine Kondensat-Ablaßöffnung 80 auf, die über eine Leitung 90 mit der saugseitigen Zuleitung 30 des Turboladers 40 verbunden ist, so daß ein Kondensat, das sich gegebenenfalls in dem Ladeluftkühler 70 bildet, sich im Bereich der Ablaßöffnung 80 sammelt und von dem Turbolader 40 abgesaugt wird. Dadurch wird eine Zueisung des Ladeluftkühlers 70 verhindert und eine unerwünschte Erhöhung des durch den Ladeluftkühler hervorgerufenen Druckverlustes vermieden.

## Patentansprüche

1. Ladeluftkühler, insbesondere für ein Kraftfahrzeug, mit Rohren, die von Ladeluft durchströmbar und von einem Kühlmedium umströmbar sind, und mit zumindest einem mit den Rohren kommunizierenden Sammelkanal, **gekennzeichnet durch** eine Kondensat-Ablaßöffnung.

2. Ladeluftkühler nach Anspruch 1, **dadurch gekennzeichnet, daß** die Kondensat-Ablaßöffnung in einem Bereich des zumindest einen Sammelkanals angeordnet ist.

3. Ladeluftkühler nach Anspruch 1 oder 2, **dadurch gekennzeichnet, daß** die Kondensat-Ablaßöffnung im Betrieb des Ladeluftkühlers in einem untersten Bereich der Ladeluft-Strömungswege innerhalb des Ladeluftkühlers angeordnet ist.

4. Ladeluftkühler nach einem der Ansprüche 1 bis 3, **dadurch gekennzeichnet, daß** die Kondensat-Ablaßöffnung saugseitig an eine Luftfördereinrichtung, insbesondere an einen Turbolader, anschließbar ist.

5. Ladeluftkühler nach einem der Ansprüche 1 bis 3, **dadurch gekennzeichnet, daß** die Kondensat-Ablaßöffnung an einen Abgaskanal, der insbesondere in einem Abgaswärmetauscher angeordnet ist, anschließbar ist.

6. Ladeluftkühler nach einem der Ansprüche 1 bis 5, **dadurch gekennzeichnet, daß** die Kondensat-Ablaßöffnung an eine Entspannungsvorrichtung, wie ein Drosselventil, anschließbar ist.

7. Ladeluftkühler nach Anspruch 6, **dadurch gekennzeichnet, daß** die Entspannungsvorrichtung mit dem Ladeluftkühler verbunden oder in den Ladeluftkühler integriert ist.
